(19) Europäisches Patentamt
European Patent Office
Office européen des brevets

(11) Veröffentlichungsnummer: **0 103 227**
**B1**

(12) # EUROPÄISCHE PATENTSCHRIFT

(45) Veröffentlichungstag der Patentschrift: **27.11.85**

(51) Int. Cl.⁴: **C 08 G 79/04,** C 08 L 85/02

(21) Anmeldenummer: **83108489.2**

(22) Anmeldetag: **29.08.83**

(54) **Verfahren zur Herstellung von Polyphosphaten, nach diesem Verfahren hergestellte Polyphosphate und ihre Verwendung.**

(30) Priorität: **10.09.82 DE 3233616**

(43) Veröffentlichungstag der Anmeldung: **21.03.84 Patentblatt 84/12**

(45) Bekanntmachung des Hinweises auf die Patenterteilung: **27.11.85 Patentblatt 85/48**

(84) Benannte Vertragsstaaten: **DE FR GB IT NL**

(56) Entgegenhaltungen:
**EP - A - 0 021 260**
**DE - A - 1 800 625**
**DE - A - 2 701 493**
**DE - B - 2 421 977**

**Patent Abstracts of Japan Band 2, Nr. 85, 12. Juli 1978 Seite 1270C78**

(73) Patentinhaber: **BAYER AG, Konzernverwaltung RP Patentabteilung, D-5090 Leverkusen 1 Bayerwerk (DE)**

(72) Erfinder: **Serini, Volker, Dr., Scheiblerstrasse 81, D-4150 Krefeld (DE)**
Erfinder: **Schulte, Bernhard, Dr., Suedwall 80a, D-4150 Krefeld (DE)**
Erfinder: **Block, Hans-Dieter, Dr., Roggendorfstrasse 65, D-5000 Koeln 80 (DE)**
Erfinder: **Freitag, Dieter, Dr., Hasenheide 10, D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von verzweigten Polyphosphaten.

Verfahren zur Herstellung von Polyphosphaten sind bekannt. So wird in der DE-OS 2701493 ein Verfahren zur Herstellung von Polyphosphaten mit Polykondensationsgraden $\overline{P}$ von 2-25 beschrieben.

Bei diesem Verfahren werden in zwei Stufen zunächst Phosphoroxychlorid mit Bisphenol, dann das Reaktionsprodukt daraus mit Phenol in Gegenwart wasserfreier Alkalihalogenide aromatischer Halogenide, z.B. LiCl, bei Temperaturen bis zu etwa 300° C miteinander umgesetzt. Dabei wird unter Bildung von oligomeren Produkten HCl abgespalten und aus dem Reaktionsprodukt entfernt. Weiterhin werden überschüssiges Phosphoroxychlorid und überschüssiges Phenol abdestilliert. Die Endprodukte enthalten noch restliches Chlor aus dem Phosphoroxychlorid und zudem die als Katalysatoren verwendeten anorganischen Chloride.

Es wurde nun ein Verfahren zur Herstellung von verzweigten Polyphosphaten mit relativen Viskositäten von $\eta$ rel = 1,010-1,200 (in $CH_2Cl_2$, c = 5 g/l) gefunden, das dadurch gekennzeichnet ist, dass

1-100 Mol-% eines oder mehrerer aromatischer Diole der Formel (1)

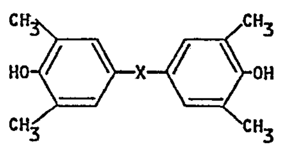

(1)

in welcher

X einen $C_1$-$C_5$-Alkylen- oder Alkylidenrest, einen $C_5$-$C_6$-Cycloalkylen- oder Cycloakylidenrest, eine Einfachbindung, –S– oder einen Rest der Formel (1a)

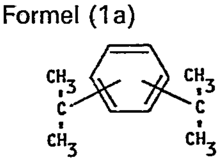

(1a)

in dem die beiden Alkylsubstituenten in o-, m- oder p-Stellung zueinander stehen können, bedeutet

und

99-0 Mol-% Hydrochinon, Resorcin oder aromatischer Diole der Formel (2)

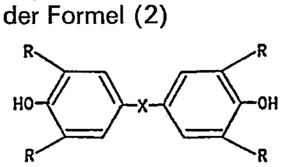

(2)

in welcher

R Wasserstoff, Halogen wie Chlor und Brom und $C_1$-$C_3$-Alkyl bedeutet, wobei maximal drei Alkylgruppen vorhanden sein dürfen,

X die bei Formel (1) angegebene Bedeutung hat, mit mindestens einem Phosphorsäureester der Formel (3)

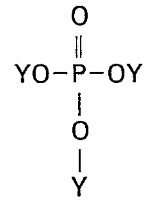

(3)

in der

Y gleiche oder verschiedene Alkyl-, Cycloalkyl-, Aryl- und Alkylaryl-Reste bedeutet,

in Gegenwart basischer Alkali- oder Erdalkaliverbindungen unter Abspaltung von Alkoholen und/oder Phenolen bei einer Temperatur von 50-350° C umgesetzt werden.

Für die Herstellung der erfindungsgemässen Polyphosphate können zum Beispiel folgende aromatischen Diole der Formel (1) eingesetzt werden:

Bis-(3,5-dimethylphenyl-4-hydroxyphenyl)-methan,
1,1-Bis-(3,5-dimethylphenyl-4-hydroxyphenyl)-ethan,
2,2-Bis-(3,5-dimethylphenyl-4-hydroxyphenyl)-propan,
2,2-Bis-(3,5-dimethylphenyl-4-hydroxyphenyl)-butan,
2,4-Bis-(3,5-dimethylphenyl-4-hydroxyphenyl)-2-methyl-butan,
3,3-Bis-(3,5-dimethylphenyl-4-hydroxyphenyl)-pentan,
1,1-Bis-(3,5-dimethylphenyl-4-hydroxyphenyl)-cyclopentan,
1,1-Bis-(3,5-dimethylphenyl-4-hydroxyphenyl)-cyclohexan,
Bis-(3,5-dimethylphenyl-4-hydroxyphenyl),
Bis-(3,5-dimethylphenyl-4-hydroxyphenyl)-sufid,
α, α'-Bis-(3,5-dimethylphenyl-4-hydroxyphenyl)-p-diisopropylbenzol.

Bevorzugt werden als aromatische Diole der Formel (1):

Bis-(3,5-dimethylphenyl-4-hydroxyphenyl)--methan und
2,2-Bis-(3,5-dimethylphenyl-4-hydroxyphenyl)-propan.

Besonders bevorzugt wird als aromatisches Diol der Formel (1) das
2,2-Bis-(3,5-dimethylphenyl-4-hydroxyphenyl)-propan.

Aromatische Diole der Formel (2) sind zum Beispiel: Dihydroxyphenyle, Bis-(hydroxy-phenyl)-alkane, Bis-(hydroxyphenyl)-cycloalkane, Bis-(hydroxyphenyl)-sulfide, α, α'-Bis-(4-hydroxyphenyl)-diisopropylbenzole.

Diese und weitere geeignete aromatische Diole der Formel (2) sind zum Beispiel in US-PS 3 028 365, 2 999 835, 3 148 172, 3 271 368, 2 991 273, 3 271 367, 3 780 087, 3 014 891, 2 999 846, in DE-OS 2 063 050, 2 211 957, 1 570 703, 2 329 585, 2 329 686 und in der Monographie „Hermann Schnell, Chemistry and Physics of Polycarbonates, Polymer Reviews, Volume 9, Interscience Publishers, New York, 1964" beschrieben.

Von den aromatischen Diolen der Formel (2) werden die der Formel (4)

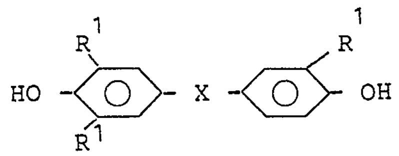
(4)

in der

X die in Formel (1) genannte Bedeutung hat und in der

$R^1$ H oder $CH_3$ bedeutet,

bevorzugt.

Solche bevorzugten aromatischen Diole der Formel (4) sind beispielsweise:

2,2-Bis-(4-hydroxyphenyl)-propan
2,2-Bis-(4-hydroxyphenyl)-butan
2,4-Bis-(4-hydroxyphenyl)-2-methylbutan
1,1-Bis-(4-hydroxyphenyl)-cyclohexan
Bis-(4-hydroxyphenyl)
Bis-(4-hydroxyphenyl)-sulfid
α, α'-Bis-(4-hydroxyphenyl)-p-diisopropylbenzol
2-(3-Methyl-4-hydroxyphenyl)-2-(4-hydroxyphenyl)-propan
2,2-Bis-(3-methyl-4-hydroxyphenyl)-propan
2-(3,5-Dimethyl-4-hydroxyphenyl)-2-(4-hydroxyphenyl)-propan
2-(3-Methyl-4-hydroxyphenyl)-2-(3,5-Dimethyl-4-hydroxyphenyl)-propan.

Besonders bevorzugt sind aromatische Diole der Formel (4), in denen $R^1$ zumindest teilweise $CH_3$ bedeutet, insbesondere jedoch, wenn die zwei Methylgruppen orthoständig zu einer phenolischen OH-Gruppe liegen. Beispiele sind die letzten vier der obengenannten Diole der Formel (4):

2-(3-Methyl-4-hydroxyphenyl)-2-(4-hydroxyphenyl)-propan
2,2-Bis-(3-methyl-4-hydroxyphenyl)-propan
2-(3,5-Dimethyl-4-hydroxyphenyl)-2-(4-hydroxyphenyl)-propan
2-(3-Methyl-4-hydroxyphenyl)-2-(3,5-Dimethyl-4-hydroxyphenyl)-propan.

Die Bisphenole der Formeln (1) und (2) können als reine Substanzen eingesetzt werden. Es können auch Bisphenole eingesetzt werden, wie sie z.B. nach dem Verfahren der DE-OS 2928464 und DE-OS 2928443 erhalten werden. In diesen Fällen können die nach diesen Verfahren erhaltenen Rohprodukte, die gegebenenfalls bis zu 15% Nebenprodukte enthalten können, ohne vorherige Reinigung eingesetzt werden.

In den Phosphorsäureestern der Formel (3) bedeuten die Reste Y organische Reste, die gleich oder ungleich sein können. Die Reste Y können Alkyl – einschliesslich Cycloalkyl –, Aryl- und Alkylarylreste bedeuten, die substituiert sein können (zum Beispiel mit Halogen).

Beispiele für Alkylgruppen sind: $C_1$-$C_{12}$-Alkylgruppen wie Methyl, Ethyl, Propyl, Butyl, Pentyl, Hexyl, Heptyl, Octyl, Nonyl, Decyl, Undecyl, Dodecyl und deren Isomere, wie Neopentyl, 3,5,5-Trimethylhexyl, 3-Methylhexyl, 2-Ethylhexyl, 2,5,5-Trimethylhexyl, weiterhin Cyclohexyl, 2-Chlorethyl und 2,3-Dibrompropyl.

Beispiele für Aryl- und Alkylarylreste sind $C_6$-Arylreste und Alkyl und Halogen-substituierte Phenyle wie Phenyl, o-, m-, p-Methyl-phenyl, 2,6-Dimethylphenyl, 2,4-Dimethylphenyl, 2,4,6-Trimethylphenyl, Diphenyl, 2- und 4-Isopropylphenyl, Nonylphenyl, 4-tert.-Butylphenyl, 2,4,6-Trichlorphenyl, 4-Chlorphenyl, 4-Bromphenyl, 2,4,6-Tribromphenyl, Naphthyl, Benzyl. Von den genannten Resten Y werden die Arylreste bevorzugt, insbesondere die halogenfreien. Von diesen wiederum werden die Phenyl-, die o-, m-, p-Methylphenyl- und die 2,6-Di-methylphenylreste ganz besonders bevorzugt.

Phosphorsäureester der Formel (3) sind beispielsweise:

Bis-(phenyl)-methylphosphat
Bis-(ethyl)-phenylphosphat
Bis-(ethyl)-2,6-dimethylphosphat
Bis-(phenyl)-ethylphosphat
Tris-(2-chlorethyl)-phosphat
Bis-(phenyl)-2-chlorethylphosphat
Bis-(butyl)-phenylphosphat
Bis-(phenyl)-butylphosphat
Bis-(neopentyl)-phenylphosphat
Bis-(4-methylphenyl)-2-ethylhexylphosphat
Bis-(2-ethylhexyl)-phenylphosphat
Bis-(2-ethylhexyl)-4-methylphenylphosphat
Bis-(phenyl)-2-ethylhexylphosphat
Tris-(octyl)-phosphat
Bis-(phenyl)-octylphosphat
Bis-(octyl)-phenylphosphat
Bis-(3,5,5-trimethylhexyl)-phenylphosphat
Bis-(2,5,5-trimethylhexyl)-4-methylphenylphosphat
Bis-(phenyl)-isodecylphosphat
Bis-(dodecyl)-4-methylphenylphosphat
Bis-(dodecyl)-phenylphosphat
Tris-(phenyl)-phosphat
Tris-(2-methylphenyl)-phosphat
Tris-(4-methylphenyl)-phosphat
Bis-(2-methylphenyl)-phosphat
Bis-(4-methylphenyl)-phosphat
Bis-(phenyl)-2-methylphenylphosphat
Bis-(phenyl)-4-methylphenylphosphat
Tris-(isopropylphenyl)-phosphat
Bis-(isopropylphenyl)-phenylphosphat
Bis-(phenyl)-isopropylphenylphosphat
Tris-(nonylphenyl)-phosphat
Tris-(2,6-dimethylphenyl)-phosphat
Bis-(2,6-dimethylphenyl)-phenylphosphat
Bis-(phenyl)-2,6-dimethylphenylphosphat
Bis-(2,6-dimethylphenyl)-4-tert.-butylphenylphosphat
Bis-(2,6-dimethylphenyl)-4-methylphenylphosphat
Bis-(2,6-dimethylphenyl)-3-methylphenylphosphat
Bis-(2,6-dimethylphenyl)-4-isopropylphenylphosphat
Bis-(2,6-dimethylphenyl)-2-isopropylphenylphosphat

Bevorzugte Phosphorsäureester der Formel (3) sind Triarylester. Besonders bevorzugte Phosphorsäureester der Formel (3) sind Triarylester mit drei gleichen Arylestern oder mit mindestens zwei

2,6-Dimethylphenylresten, z.B.:
Tris-(phenyl)-phosphat
Tris-(2-methylphenyl)-phosphat
Tris-(4-methylphenyl)-phosphat
Tris-(isopropylenphenyl)-phosphat
Tris-(2,6-dimethylphenyl)-phosphat
Bis-(2,6-dimethylphenyl)-phenylphosphat
Bis-(2,6-dimethylphenyl)-2-methylphenyl-phosphat
Bis-(2,6-dimethylphenyl)-4-methylphenyl-phosphat
Bis-(2,6-dimethylphenyl)-isopropylphenyl-phosphat

Ganz besonders bevorzugte Triarylester sind Triphenylphosphat und Tri-(2,6-dimethylphenyl)--phosphat.

Erfindungsgemäss als Katalysatoren einsetzbar sind basisch wirkende Alkali- und Erdalkaliverbindungen. Diese können anorganischer sowie organischer Natur sein. Solche Verbindungen sind beispielsweise:

Metalle, zum Beispiel Li, Na, Ca; Hydride, zum Beispiel LiH, NaH, KH, $CaH_2$; Oxide, zum Beispiel $Li_2O$, $Na_2O$, $K_2O$, CaO, BaO; Hydroxide, zum Beispiel LiOH, NaOH, KOH, $Ba(OH)_2$, $Sr(OH)_2$, $Ca(OH)_2$; Alkaliborhydride, zum Beispiel $NaBH_4$; Amide der Alkalimetalle, zum Beispiel Li-, Na- und K-amid; Alkali- und Erdalkalialkoholate, zum Beispiel Methylate, Ethylate, Propylate, Butylate, Cyclohexanolate des Li, Na, K oder Ca; Phenolate, zum Beispiel die Li-, Na-, K-Salze des Phenols, des o-, m-, p-Kresols, des 2,6-Dimethylphenols; Bis-Alkalisalze von aromatischen Dihydroxyverbindungen, wie die Li-, Na-, und K-Salze des 2,2-Bis-(4-hydroxyphenyl)-propans, oder des 2,2-Bis-(3,5-dimethyl-4-hydroxyphenyl)-propans.

Bevorzugt werden die Alkaliverbindungen und von diesen die Na- und K-Verbindungen. Besonders bevorzugt werden die Hydroxide, Alkoholate, Phenolate und Bisphenolate. Ganz besonders bevorzugt wird das Na-Phenolat.

Die Umsetzung der aromatischen Diole mit den Phosphorsäureestern wird im allgemeinen wie folgt vorgenommen: Der Phosphorsäureester wird vorgelegt und gegebenenfalls aufgeschmolzen. Zu dem Phosphorsäureester wird das aromatische Diol gegeben und unter Erwärmen gelöst. Dann wird der Katalysator zugegeben. Bei erhöhter Temperatur setzt dann die Abspaltung von Alkohol, beziehungsweise Phenol, ein. Der abgespaltene Alkohol, beziehungsweise das abgespaltene Phenol wird abdestilliert. Zurück bleibt als Schmelze das erfindungsgemässe Polyphosphat.

Bei Einsatz mehrerer aromatischer Diole oder mehrerer Phosphorsäureester wird analog verfahren. die Reihenfolge des Zusammengebens der Ausgangskomponenten kann anders sein als oben beschrieben. Auch ist für die Reaktion eine Löslichkeit der Komponenten ineinander nicht unbedingt notwending, wenn auch günstig. Der Zugabezeitpunkt des Katalysators nach dem Aufschmelzen der Ausgangskomponenten ist nicht kritisch. Die Zugabe kann auch vor oder während des Aufschmelzens von Ausgangskomponenten erfolgen. Es kann auch von Nutzen sein, noch während der Reaktion Katalysator nachzugeben, um eine ausreichende Reaktionsgeschwindigkeit aufrechtzuerhalten. Der Katalysator braucht nicht oder nicht voll in der Reaktionsmischung gelöst zu sein, obwohl dies für die Reaktion und die Qualität des erhaltenen Produktes günstig sein kann.

Das Aufschmelzen der Ausgangskomponenten erfolgt im allgemeinen bei Temperaturen von 50-300° C, bevorzugt bei 100-250° C, besonders bevorzugt bei 125-225° C.

Die Zugabe des Katalysators erfolgt bevorzugt nach dem Aufschmelzen der Ausgangskomponenten. Besonders günstig für den Start und den Fortgang der Reaktion ist eine Zugabe des Katalysators bei 100-250° C, bevorzugt bei 125-225° C.

Die Reaktionstemperatur wird so niedrig wie möglich gehalten, im allgemeinen liegt sie bei 100-350° C, bevorzugt bei 125-300° C, besonders bevorzugt bei 150-250° C.

Die Reaktionstemperatur liegt in der Anfangsphase, in der der Hauptteil des Alkohols oder Phenols (ca. 90%) abgespalten wird, bei möglichst niedriger Temperatur, bevorzugt bei 100-250° C, besonders bevorzugt bei 125-225° C.

Die Polykondensation erfolgt mit Vorteil unter vermindertem Druck. Im allgemeinen wird bei Drücken zwischen 600 und 0,01 mm Hg, bevorzugt bei Drücken zwischen 400 und 0,025 mm Hg, besonders bevorzugt bei Drücken zwischen 250 und 0,05 mm Hg gearbeitet. Im allgemeinen wird die Hauptmenge des Alkohols bzw. Phenols (ca. 90%) zwischen 600 und 10 mm Hg abgespalten. Der Restalkohohl bzw. das Restphenol wird im allgemeinen zwischen 10 und 0,01 mm Hg abdestilliert.

Etwa notwendig werdender Druckausgleich kann mit Inertgas (z.B. $CO_2$, $N_2$) erreicht werden. Auf diese Weise wird der Luftsauerstoff möglichst von dem Reaktionsmedium ferngehalten. Auch das Aufschmelzen der Reaktanden erfolgt im allgemeinen unter Inertgas.

Der Restgehalt an abgespaltenem Alkohol bzw. Phenol im erfindungsgemässen Polyphosphat beträgt im allgemeinen unter 2%, bevorzugt unter 1%, besonders bevorzugt unter 0,5% und ganz besonders bevorzugt unter 0,1%, bezogen auf die Menge des erhaltenen erfindungsgemässen Polyphosphats.

Die mindestens einzusetzende Katalysatormenge ist abhängig von der Art der eingesetzten aromatischen Diole. In Abhängigkeit vom verwendeten aromatischen Diol kann die Katalysatormenge im Bereich einer Zehnerpotenz variieren. Dies kann im Hinblick auf die Empfindlichkeit einiger aromatischer Diole, die Heftigkeit der Reaktion und die mögliche Empfindlichkeit der Polyphosphate angezeigt sein.

Bei der Umsetzung von aromatischen Diolen der Formeln (1), (2) und (4) mit Phosphaten der Formel (3) werden im allgemeinen 1,0-0,0001, bevorzugt 0,5-0,0005, besonders bevorzugt 0,05-0,0005 Mol Alkali oder Erdalkali/Mol Phosphat eingesetzt.

Bei Einsatz hoher Katalysatormengen kann es vorteilhaft sein, bei niedriger Temperatur und bei

nur leicht reduziertem Druck mit der Umsetzung zu beginnen.

Die hergestellten verzweigten Polyphosphate enthalten ionische Gruppen, deren Anzahl abhängig von der eingesetzten Katalysatormenge ist.

Die nach dem erfindungsgemässen Verfahren hergestellten verzweigten Polyphosphate stellen neue Polymere mit technisch interessanten Eigenschaften dar. Von den Polyphosphaten werden die bevorzugt, die neben den aromatischen Diolen der Formel (2) und insbesondere der Formel (4) mindestens 25 Mol-%, bevorzugt mindestens 50 Mol-%, besonders bevorzugt mindestens 85 Mol-% aromatische Diole der Formel (1) enthalten.

Ganz besonders bevorzugt sind verzweigte Polyphosphate, die nur aromatische Diole der Formel (1) einkondensiert enthalten.

Bei der Herstellung der erfindungsgemässen verzweigten Polyphosphate werden die aromatischen Diole und die monomeren Phosphate im allgemeinen im Verhältnis 0,66/1-2,3/1 Molteile eingesetzt. Bevorzugt werden Verhältnisse von 0,66/1-0,96/1 und 2,3/1-1,6/1, besonders bevorzugt werden Verhältnisse von 0,75/1-0,96/1 und 2,2/1-1,6/1, ganz besonders bevorzugt von 0,8/1-0,92/1 und 2,1/1-1,7/1.

Die erfindungsgemässen verzweigten, ionogenen Polyphosphate bestehen aus Polymereinheiten der Formeln (5) und/oder (6) und gegebenenfalls (7) und enthalten Verzweigungsstellen der Formel (8).

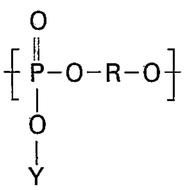
(5)

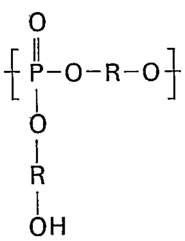
(6)

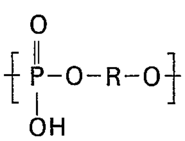
(7)

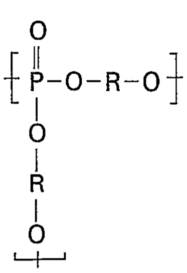
(8)

sowie Endgruppen der Formeln (9), (10), (11) und gegebenenfalls der Formeln (12), (13) und (14).

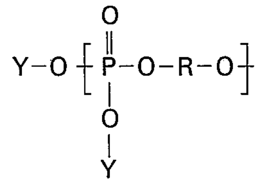
(9)

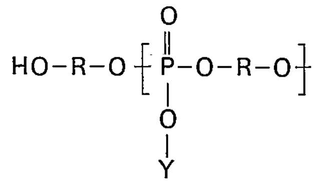
(10)

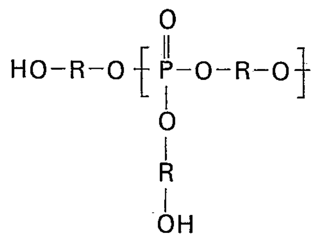
(11)

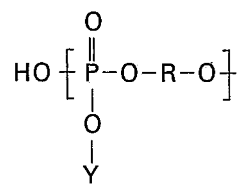
(12)

(13)
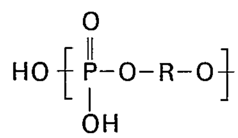

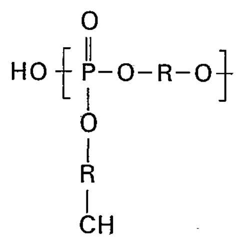
(14)

in denen

Y die bei Formel (3) angegebene Bedeutung hat und R für einen Rest der Formel

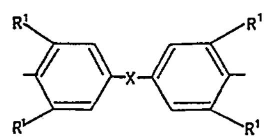

in welcher

$R^1$ für Wasserstoff, einen $C_1$-$C_3$ Alkylrest, Halogen wie Chlor oder Brom steht, und

X die bei Formel (1) angegebene Bedeutung hat.

Die Polymereinheit der Formel (7) und die Endgruppe der Formeln (12), (13) und (14) können entstehen, wenn z.B. Alkalihydroxide als Katalysatoren eingesetzt werden oder Wasser während der Umsatzung anwesend ist.

Die erfindungsgemässen Polyphosphate enthalten ionische Gruppen, die dadurch entstehen können, dass endständige OH-Gruppen durch Reaktion mit basischen Verbindungen, z.B. durch Reaktion mit den als Katalysator eingesetzten Alkaliverbindungen, Salze, z.B. $-O^{\ominus}Me^{\oplus}$, $O^{\ominus}$ ½ $Me^{\oplus\oplus}$ bilden. ($Me^{\oplus}$ bedeutet z.B. Alkaliionen wie $Li^{\oplus}$, $Na^{\oplus}$, $K^{\oplus}$ und $Me^{\oplus\oplus}$, z.B. Erdalkaliionen wie $Ca^{\oplus\oplus}$, $Ba^{\oplus\oplus}$.)

Die Anzahl dieser ionischen Gruppen kann von der eingesetzten Katalysatormenge abhängen. Im allgemeinen werden verzweigte Polyphosphate bevorzugt, die ionische Gruppen entsprechend der bevorzugt eingesetzten Katalysatormenge aufweisen. In besonderen Fällen jedoch kann es erwünscht sein, den Gehalt an ionischen Gruppen auf ein besonders hohes oder besonders niedriges Mass zu bringen, z.B. durch Zusatz von Wasser oder Basen oder basenbindenden Substanzen, z.B. Dialkylsulfaten wie Dimethylsufat, Diethylsulfat, oder organischen Säuren wie Toluolsulfonsäure.

Im allgemeinen werden diese Verbindungen in der gewünschten Menge gegen Schluss der Polykondensation in die Polymerschmelze gegeben. Danach werden noch einige Zeit die Umsetzungsbedingungen aufrechterhalten, damit die zugesetzten basenbindenden Substanzen mit den ionischen Phosphatgruppen reagieren können.

Durch Einstellen bestimmter Molverhältnisse aromatisches Diol der Formeln (1) und/oder (2) und Phosphat der Formel (3) kann der Gehalt bestimmter Gruppen der Formeln (5) bis (14) im erfindungsgemässen Polyphosphat beeinflusst werden.

Dies kann für den jeweiligen Einsatzzweck von entscheidender Bedeutung sein. So überwiegen beispielsweise im allgemeinen bei den Molverhältnissen aromatisches Diol/Phosphat gleich 0,66/1-1,49/1 die Struktureinheiten der Formeln (5) und (9) gegenüber den Struktureinheiten der Formeln (6) und (11), während bei Molverhältnissen aromatisches Diol/Phosphat gleich 1,51-2,3/1 die Struktureinheiten der Formeln (6) und (11) gegenüber den Struktureinheiten der Formeln (5) und (9) überwiegen. Bei den bevorzugten Molverhältnissen aromatisches Diol/Phosphat gleich 0,5/1-0,96/1 können von den Struktureinheiten der Formeln (5), (6), (9), (10) und (11) nahezu nur Struktureinheiten der Formeln (5) und (9) und bei den bevorzugten Molverhältnissen von aromatischem Diol/Phosphat 2,5/1-2,03/1 nahezu nur Struktureinheiten der Formeln (6) und (11) im erfindungsgemässen Polyphosphat erhalten werden.

Im ersten Falle bedeutet das, dass nahezu keine phenolischen OH-Gruppen aus aromatischem Diol im Polyphosphat vorhanden sind (z.B. $\leqq$ 0,2%, bevorzugt $\leqq$0,1% OH aus aromatischem Diol). Im zweiten Fall bedeutet das, dass nahezu alle phenolischen Gruppen im Polyphosphat vorhanden sind.

Der Polykondensationsgrad kann durch laufende Messung der Schmelzviskosität des Reaktionsmediums verfolgt werden.

Die verzweigten Polyphosphate dieser Erfindung können bei 20° C zähflüssige oder mehr oder weniger plastische Harze darstellen. Sie weisen dann Glastemperaturen unter 20° C auf. Sie können jedoch auch harte thermoplastische Harze darstellen, die bevorzugt Glastemperaturen $T_g$ über 20° C besitzen. Besonders bevorzugt sind solche mit Glastemperaturen $T_g$ über 40° C. Ganz besonders bevorzugt sind solche mit Glastemperaturen über 60° C, insbesondere über 70° C.

Das erfindungsgemässe Verfahren hat gegenüber dem Verfahren der eingangs zitierten DE-OS 2 701 493 mehrere Vorteile. Zunächst sind die Ausgangsstoffe leichter zu handhaben, da statt des agressiven Phosphoroxychlorids inerte Phosphorsäureester einsetzbar sind. Dann stellt unser Verfahren ein Einstufenverfahren dar, während das Verfahren der DE-OS 2 701 493 zweistufig durchzuführen ist, was besonderen technischen Aufwand erfordert. Während unser Verfahren vorteilhaft in üblichen Stahlkesseln durchzuführen ist, erfordert das Verfahren der DE-OS 2 701 493 wegen der Korrosionsgefahr durch Ausgangsstoffe und entstehende korrosive Gase aufwendige Glas- oder Emailapparaturen. Zudem hat das Verfahren der DE-OS 2 701 493 gegenüber unserem Verfahren den Nachteil, dass bei der hohen Reaktionstemperatur durch sich bildendes HCl-Gas im allgemeinen eine starke Zersetzung des Bisphenols zu unvorteilhaften, zum Teil stark farbigen Nebenprodukten einsetzen kann, die sowohl für die Reaktion als auch für die Endprodukte nachteilig sind.

Die erfindungsgemässen verzweigten Polyphosphate haben gegenüber bisher bekannten Polyphosphaten, wie z.B. denen der DE-OS 2 701 493, Vorteile. Sie weisen keinerlei Gehalte an HCl bzw. Salzsäure auf, was bei Polyphosphaten nicht zu vermeiden ist, die durch HCl-Abspaltung aus den Ausgangskomponenten gewonnen werden. Sie führen infolgedessen auch bei der thermoplastischen Verarbeitung an Verarbeitungsmaschinen, wie z.B. Extrudern, Walzen oder Knetern, und an Formen nicht zu Korrosion. Auch wird jegliche Korrosion bei Kontakt der ionogenen, verzweigten Polyphosphate mit anderen Metallteilen, wie z.B. bei Anwendungen im Elektrosektor, vermieden.

Weiterhin enthalten die Polyphosphate dieser Erfindung keine Reste von an Phosphor gebundenem Chlor und keine Metallhalogenide. Solche Reste von gebundenem Cl und Metallhalogenide führen ebenfalls bei der Verarbeitung oder Anwendung zu Korrosionsschäden.

Die verzweigten, ionogenen Polyphosphate dieser Erfindung haben fiktive Molekulargewichte $\overline{M}_W$ (gemessen durch Gelchromatographie, Eichung mit BPA-Polycarbonat), von 1600-150 000, bevorzugt von 2300-50 000, besonders bevorzugt von 3200-25 000 und ganz besonders bevorzugt von 5000-20 000.

Ihre relative Viskosität liegt im allgemeinen bei 1,01-1,20, bevorzugt bei 1,02-1,18, besonders bevorzugt bei 1,03-1,15 (gemessen in $CH_2Cl_2$, c = 0,5 g/l).

Die verzweigten Polyphosphate dieser Erfindung zeigen mittlere Polykondensationsgrade $\overline{P}$ = 3-30, bezogen auf die Phosphatgruppe im Polyphosphat. Bevorzugt werden Polykondensations-

grade von $\overline{P}$ = 4-25, besonders bevorzugt von 7-20.

Die erfindungsgemässen verzweigten Polyphosphate, die nur geringe Anteile an aromatischen Diolen der Formel (1) einkondensiert enthalten, können, insbesondere bei niedrigem Polykondensationsgrad, bei 20° C dickflüssig bis plastisch und mehr oder weniger elastisch sein, das heisst Glastemperaturen unter 20° C aufweisen. Mit ansteigendem Polykondensationsgrad und insbesondere bei höheren Anteilen an einkondensierten aromatischen Diolen der Formel (1) steigt die Glastemperatur dann sehr schnell an. So können schon bei mittleren Kondensationsgraden von ca. $\overline{P}$ = 4 Glastemperaturen $T_g$ deutlich über 20° C erhalten werden, während bei $\overline{P}$ = 7 im allgemeinen die Glastemperaturen $T_g$ über 60° C liegen und im Bereich bis zu maximal $\overline{P}$ = 30 bis auf über $T_g$ = 150° C ansteigen können.

Die verzweigten Polyphosphate dieser Erfindung sind geeignet als Mischungspartner für andere Polymere. Insbesondere die mit höheren Glastemperaturen setzen die Wärmestandfestigkeit der Mischungen nur geringfügig herab. Sie zeigen trotz ihrer relativ hohen Glastemperatur und der ionischen Gruppen bei der thermoplastischen Verarbeitung eine hohe Fliessfähigkeit. Auch die Fliessfähigkeit der Mischungen mit anderen Polymeren ist ausserordentlich hoch. Weiterhin weisen sie eine überraschend hohe Hydrolysestabilität auf, und wirken in Mischungen mit anderen Polymeren stabilisierend gegen Verfärbung und Polymerabbau, die beispielsweise durch Wärme- und Sauerstoffeinwirkung sowie Hydrolyse entstehen können.

Eine weitere Eigenschaft der verzweigten Polyphosphate dieser Erfindung ist, dass sie flammwidrig sind und selbst in der Flamme kaum brennen. Sie sind auch als flammwidrigmachende Mischungspartner für leichter brennbare Polymere geeignet. Gegebenenfalls können solche Polymermischungen neben den verzweigten Polyphosphaten unserer Erfindung noch andere flammwidrigmachende Verbindungen enthalten, z.B. Halogenverbindungen und Metalloxide. Weiterhin besitzen sie verbesserte Metallhaftung, geringere elektrostatische Aufladbarkeit und bessere Bedruckbarkeit, auch in Mischung mit anderen Polymeren.

Die Polyphosphate dieser Erfindung sind vielseitig nutzbar, so z.B. als Stabilisatoren, Weichmacher, Gleitmittel, Flammschutzzusätze und andere Hilfsmittel für Duroplaste und Thermoplaste. Sie können auch allein als Kleber und Kitte sowie für Beschichtungen oder Formkörper eingesetzt werden, wofür sie sich durch ihre gute Haftung auf verschiedenen Materialien, wie Glas, Metall und Holz, ihre hohe Flammwidrigkeit, ihre niedrige Schmelzviskosität und ihre hohe Hydrolysestabilität eignen.

Thermoplaste, die durch die verzweigten Polyphosphate dieser Erfindung mit Vorteil modifiziert werden können, sind beispielsweise Homo- und Copolymerisate des Styrols und seiner Derivate, der Acryl- und Methacrylverbindungen, des Maleinsäureanhydrids und des Vinylchlorids sowie deren kautschukmodifizierte Varianten. Solche Homo- und Copolymerisate sind beispielsweise Polystyrol, Styrol-Acrylnitril-Copolymer, α-Methylstyrol-Acrylnitril-Copolymer, Styrol-Maleinsäureanhydrid-Copolymer, Styrol-Acrylnitril-Maleinsäureanhydrid-Copolymer, Polymethylmethacrylat, Styrol-Methylmethacrylat-Copolymer, Styrol-Acrylnitril-Methylmethacrylat-Copolymer und Polyvinylchlorid. Kautschukmodifizierte Varianten solcher Polymerisate sind beispielsweise ABS-Polymere und HIPS-Polymere. Weitere Thermoplaste, die mit den verzweigten, ionogenen Polyphosphaten dieser Erfindung mit Vorteil modifizierbar sind, sind zum Beispiel: Polyamide, Celluloseester, aromatische-aliphatische Polyester, wie Polyäthylen- und Polybutylenterephthalat, aromatische Polyester, aromatische Polycarbonate, Polysulfone, Polyäthersulfone und insbesondere Polyphenylenäther und deren Mischungen mit Homo- oder Copolymeren des Styrols, wie Mischungen aus Poly-(2,6-dimethyl-p-phenylenoxid) und kautschukmodifiziertem Polystyrol, wie HIPS (= high Impact Polystyrene).

Duroplaste können ebenfalls mit Vorteil durch die verzweigten Polyphosphate der Erfindung modifiziert werden. Sie können den Duromeren, wie z.B. Phenolharzen, Polyurethansystemen, Melaminharzen, Epoxidharzen, ungesättigten Polyesterharzen und anderen vernetzenden Polymeren vor der Aushärtung zugemischt werden.

*Beispiele*

*Beispiel 1:*

*Herstellung eines verzweigten, ionogenen Polyphosphats aus 2,2-Bis-(3,5-dimethyl-4-hydroxyphenyl)-propan und Triphenylphosphat*

In einen mit Rührer versehenen Kolben wurden 326,1 g (1 Mol) Triphenylphosphat aufgeschmolzen und auf 200° C erhitzt. Dann wurden 256,0 g (0,9 Mol) 2,2-Bis-(3,5-dimethyl-4-hydroxyphenyl)-propan zugesetzt und gelöst. Dazu wurden 116,1 g (0,02 Mol) Na-Phenolat gegeben und ebenfalls gelöst. Bei 200° C wurde dann langsam der Druck bis auf 200 mm Hg vermindert und das freiwerdende Phenol abdestilliert. Bei Nachlassen der Phenolabspaltung wurde dann der Druck langsam weiter bis auf 0,2 mm Hg abgesenkt und weiter Phenol abgezogen. Nach dieser Druckminderung wurde der Ansatz noch 30 min bei 220° C und 0,2 mm Hg gehalten und restliches Phenol abgezogen. Der Ansatz wurde während des Aufschmelzens und der Kondensation unter $N_2$ gehalten und gerührt. Als Rückstand verblieb ein Produkt, das beim Erkalten zu einem harten festen Polymer erstarrte. Eigenschaften dieses Polymers sind in Tab. 1 enthalten.

*Beispiele 2-6:*

*Herstellung von weiteren verzweigten, ionogenen Polyphosphaten aus verschiedenen aromatischen Diolen.*

Nach der Vorschrift des Bsp. 1 wurden weitere verzweigte, ionogene Polyphosphate hergestellt

(Bsp. 2-5), wobei die Ausgangsstoffe geändert wurden (wie in Tab. 1 angegeben). Eigenschaften der erhaltenen verzweigten, ionogenen Polyphosphate sind in Tab. 1 angegeben.

*Tab. 1: Herstellung von verzweigten, ionogenen Polyphosphaten (Bsp. 1-6)*

| Bsp. | Eingesetzte aromatische Diole (Molverhältnis) | Molverhältnis aromatische Diole/TPP | Katalysator Na-Phenolat (Mol/Mol TPP) | Polyphosphat | | | |
|---|---|---|---|---|---|---|---|
| | | | | Konsistenz | Farbe | η rel | $T_g$ (°C) |
| 1 | TMBPA | 0,90/1 | 0,02 | hart | hellgelb | 1,08 | 85 |
| 2 | TMBPA | 1,05/1 | 0,015 | hart | hellgelb | 1,09 | 102 |
| 3 | TMBPA | 1,75/1 | 0,02 | hart | farblos | 1,06 | 110 |
| 4 | TMBPF | 0,90/1 | 0,01 | hart | farblos | 1,10 | 71 |
| 5 | TMBPA/BPA 60/40 | 0,80/1 | 0,008 | hart | hellgelb | 1,04 | 48 |
| 6 | TMBPA/DMBPA 60/40 | 0,80/1 | 0,015 | hart | hellgelb | 1,04 | 58 |

TMBPA = 2,2-Bis-(3,5-dimethyl-4-hydroxyphenyl)-propan
TMBPF = Bis-(3,5-dimethyl-4-hydroxyphenyl)-methan
BPA = 2,2-Bis-(4-hydroxyphenyl)-propan
DMBPA = 2-(3,5-Dimethyl-4-hydroxyphenyl)-2-(4-hydroxyphenyl)-propan

TPP = Triphenylphosphat
$T_g$ = Glasübergangstemperatur, gemessen durch Differentialthermoanalyse
η rel = relative Viskosität, gemessen in $CH_2Cl_2$ bei 25° C, c = 5 g/l

## Patentansprüche

1. Verfahren zur Herstellung von verzweigten Polyphosphaten mit relativen Viskositäten von η rel = 1,010-1,200 (in $CH_2Cl_2$, c = 5 g/l), dadurch gekennzeichnet, dass 1-100 Mol-% eines oder mehrerer aromatischer Diole der Formel (1)

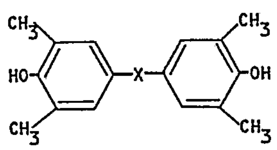
(1)

in welcher
X einen $C_1$-$C_5$-Alkylen- oder Alkylidenrest, einen $C_5$-$C_6$-Cycloalkylen- oder Cycloalkylidenrest, eine Einfachbindung, –S– oder einen Rest der Formel (1a)

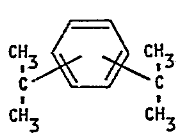
(1a)

in dem die beiden Alkylsubstituenten in o-, m- oder p-Stellung zueinander stehen können, bedeutet
und
99-0 Mol-% Hydrochinon, Resorcin oder aromatischer Diole der Formel (2)

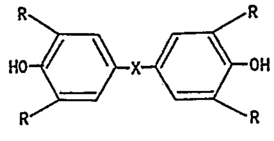
(2)

in welcher
R Wasserstoff, Halogen und Alkyl bedeutet, wobei maximal drei Alkylgruppen vorhanden sein dürfen,
X die bei Formel (1) angegebene Bedeutung hat, mit mindestens einem Phosphorsäureester der Formel (3)

```
      O
      ‖
  YO–P–OY        (3)
      |
      O
      |
      Y
```

in der
Y gleiche oder verschiedene Alkyl-, Cycloalkyl-, Aryl- und Alkylaryl-Reste bedeutet,
in Gegenwart basischer Alkali- oder Erdalkaliverbindungen unter Abspaltung von Alkoholen und/oder Phenolen bei einer Temperatur von 80-350° C umgesetzt werden.

2. Verzweigte Polyphosphate, dadurch gekennzeichnet, dass sie nach dem Verfahren des Anspruchs 1 hergestellt worden sind.

3. Verwendung von verzweigten Polyphosphaten nach Anspruch 1 zur Herstellung von Überzügen und Formkörpern.

4. Verwendung von verzweigten Polyphosphaten nach Anspruch 1 als Mischungspartner für Thermoplaste.

5. Verwendung von verzweigten Polyphosphaten nach Anspruch 1 als Zusatz bei der Herstellung von Duromeren.

## Claims

1. Process for the production of branched polyphosphates having relative viscosities of η rel = 1.010-1.200 (in $CH_2Cl_2$, c = 5 g/l), characterised in that 1-100 mol % of one or more aromatic diols of the formula (1)

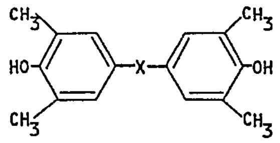
(1)

in which

X denotes a $C_1$-$C_5$-alkylene or alkylidene radical, a $C_5$-$C_6$-cycloalkylene or cycloalkylidene radical, a single bond, −S− or a radical of the formula (1a)

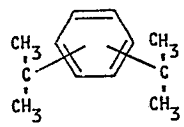
(1a)

in which the two alkyl substituents can be in the o-, m- or p-position to each other, and

99-0 mol % of hydroquinone, resorcinol or aromatic diols of the formula (2)

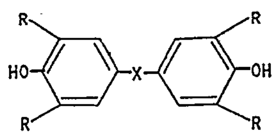
(2)

in which

R denotes hydrogen, halogen and alkyl, with the proviso that at most three alkyl groups may be present, and X has the meaning indicated under formula (1), are reacted with at least one phosphoric acid ester of the formula (3)

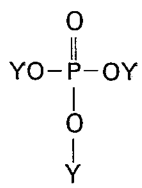
(3)

in which

Y denotes identical or different alkyl, cycloalkyl, aryl and alkylaryl radicals,

at a temperature of 80-350° C in the presence of basic alkali metal or alkaline earth metal compounds with the elimination of alcohols and/or phenols.

2. Branched polyphosphates, characterised in that they have been produced by the process of Claim 1.

3. Use of branched polyphosphates according to Claim 1 for the production of coatings and mouldings.

4. Use of branched polyphosphates according to Claim 1 as compounding ingredients for thermoplastics.

5. Use of branched polyphosphates according to Claim 1 as an additive in the production of duromers.

**Revendications**

1. Procédé de production de polyphosphates ramifiés ayant des viscosités relatives η rel de 1,010 à 1,200 (dans $CH_2Cl_2$, c = 5 g/l), caractérisé en ce qu'on fait réagir en présence de composés de métaux alcalins ou alcalino-terrreux, basiques, avec séparation d'alcools et/ou de phénols, à une température de 80 à 350° C, 1 à 100 mol % d'un ou plusieurs diols aromatiques de formule (1):

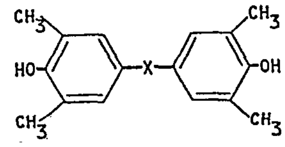
(1)

dans laquelle

X représente un reste alkylène ou alkylidène en $C_1$ à $C_5$, un reste cycloalkylène ou cycloalkylidène en $C_5$-$C_6$, une liaison simple, −S− ou un reste de formule (1a)

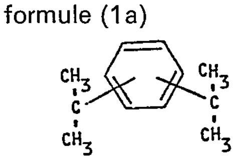
(1a)

dans laquelle les deux substituants alkyles peuvent être en position o, m, ou p l'un par rapport à l'autre, et

99 à 0 mol % de l'hydroquinone, du résorcinol ou de diols aromatiques de formule (2):

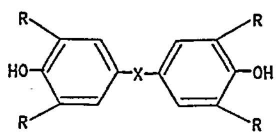
(2)

dans laquelle

R représente un atome d'hydrogène ou d'halogène ou un groupe alkyle, trois groupes alkyles au maximum devant être présents

X a le sens indiqué pour la formule (1),

avec au moins un ester de l'acide phosphorique de formule (3):

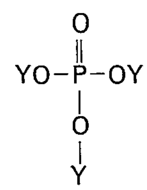
(3)

dans laquelle

Y représente des restes alkyles, cycloalkyles, aryles et alkylaryles identiques ou différents.

2. Polyphosphates ramifiés, caractérisés en ce qu'ils ont été produits d'après le procédé de la revendication 1.

3. Utilisation de polyphosphates ramifiés selon la revendication 1 pour la production de revêtements et d'objets moulés.

4. Utilisation de polyphosphates ramifiés selon la revendication 1 comme produits à mélanger à des matières thermoplastiques.

5. Utilisation de polyphosphates ramifiés selon la revendication 1 à titre d'additif lors de la production de matières thermodurcissables.